# EUROPEAN PATENT APPLICATION

(11) **EP 4 632 230 A1**
(43) Date of publication of application: **15.10.2025**
(21) Application number: 23911833.4
(22) Date of filing: 18.12.2023
(51) Int. Cl.: F04D 7/00, F04B 15/08, F17C 9/00

(54) **GAS REPLACEMENT METHOD FOR LIQUEFIED HYDROGEN PUMP**

(30) Priority: 28.12.2022 JP 2022211622
(71) Applicant: KAWASAKI JUKOGYO KABUSHIKI KAISHA, Kobe-shi, Hyogo 650-8670 (JP)
(72) Inventor: YAMANE, Yuya, Hyogo 650-8670 (JP); KAWABETA, Keisuke, Hyogo 650-8670 (JP); MATSUDAI, Ryogo, Hyogo 650-8670 (JP); OGIYAMA, Naoya, Hyogo 650-8670 (JP); TAKESHITA, Kyohei, Hyogo 650-8670 (JP); TAKEUCHI, Nobuyoshi, Hyogo 650-8670 (JP)
(74) Representative: Müller-Boré & Partner Patentanwälte PartG mbB
(86) International application number: PCT/JP2023/045381
(87) International publication number: WO 2024/143053

(57) **Abstract**

Provided is a method for discharging liquefied hydrogen (10) remaining in a liquefied hydrogen pump (1), using a replacement gas. The method includes: performing a first purge, the first purge including: supplying a hydrogen gas to an inside of a liquefied hydrogen pump (1); and causing the supplied hydrogen gas to push out liquefied hydrogen (10) to an outside from the inside of the liquefied hydrogen pump (1); and performing, after the first purge, a second purge, the second purge including: supplying a nitrogen gas to the inside of the liquefied hydrogen pump (1); and causing the supplied nitrogen gas to push out the hydrogen gas (10) to the outside from the inside of the liquefied hydrogen pump (1).

## Description

### Technical Field

The present disclosure relates to a technique for discharging, using a replacement gas, liquefied hydrogen remaining in a liquefied hydrogen pump that sends out liquefied hydrogen.

### Background Art

As a liquefied hydrogen pump, for example, a pump disclosed in Patent Literature 1 below is known. The liquefied hydrogen pump described in Patent Literature 1 includes an outer tank, an inner tank disposed inside the outer tank, and a pump body disposed inside the inner tank. Liquefied hydrogen is stored in the inner tank, and the liquefied hydrogen in the inner tank is sent out to the outside by the pump body. Between the inner tank and the outer tank, there is formed a vacuum insulation layer for keeping the liquefied hydrogen in the inner tank cold.

When the liquefied hydrogen pump as described above is maintained, it is necessary to previously discharge liquefied hydrogen remaining in the liquefied hydrogen pump (inner tank) in order to ensure safety and for another purpose. However, the liquefied hydrogen is cryogenic; therefore, depending on handling, there is a possibility that a replacement gas such as nitrogen in contact with the liquefied hydrogen is solidified and a solidified component causes some kind of problem.

### Citation List

### Patent Literature

Patent Literature 1: JP 2018-80801 A

### Summary of Invention

The present disclosure has been made in view of the above circumstances, and an object of the present disclosure is to provide a method capable of discharging liquefied hydrogen from a liquefied hydrogen pump without solidification of a replacement gas.

In order to solve the above problem, a gas replacement method for a liquefied hydrogen pump according to one aspect of the present disclosure is a method for discharging, using a replacement gas, liquefied hydrogen remaining in a liquefied hydrogen pump that sends out liquefied hydrogen, and the gas replacement method includes: performing a first purge, the first purge including: supplying a hydrogen gas to an inside of the liquefied hydrogen pump; and causing the supplied hydrogen gas to push out the liquefied hydrogen to an outside from the inside of the liquefied hydrogen pump; and performing, after the first purge, a second purge, the second purge including: supplying a nitrogen gas to the inside of the liquefied hydrogen pump; and causing the supplied nitrogen gas to push out the hydrogen gas to the outside from the inside of the liquefied hydrogen pump.

With the gas replacement method for a liquefied hydrogen pump of the present disclosure, the liquefied hydrogen can be discharged from the liquefied hydrogen pump without solidification of the replacement gas.

### Brief Description of Drawings

FIG. 1 is a system diagram illustrating a schematic configuration of facility including a liquefied hydrogen pump to which a gas replacement method according to an embodiment of the present disclosure is applied.
FIG. 2 is an enlarged schematic view illustrating the liquefied hydrogen pump alone.
FIG. 3 is a flowchart illustrating a procedure of an inerting process for performing gas replacement inside the liquefied hydrogen pump.
FIG. 4 is an operation explanatory diagram of a first half of the inerting process.
FIG. 5 is an operation explanatory diagram of a latter half of the inerting process.

### Description of Embodiments

### [Configuration of Liquefied Hydrogen Pump]

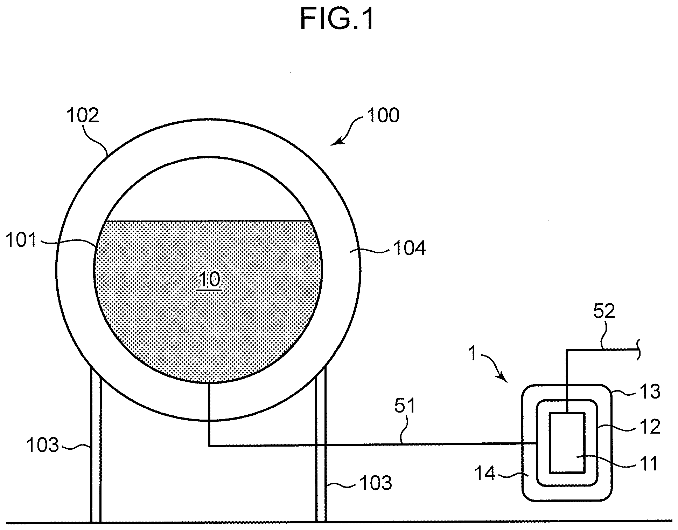

FIG. 1 is a system diagram illustrating a schematic configuration of facility including a liquefied hydrogen pump 1 to which a gas replacement method according to an embodiment of the present disclosure is applied. The liquefied hydrogen pump 1 is a pump used when a liquefied hydrogen 10 is delivered from a liquefied hydrogen tank 100 storing the liquefied hydrogen 10. In the present embodiment, the liquefied hydrogen tank 100 is a double shell spherical tank, and includes: an inner tank 101 having a spherical shape, the inner tank 101 defining storage space for the liquefied hydrogen 10; an outer tank 102 having a spherical shape, the outer tank 102 accommodating the inner tank 101; and support columns 103 that support the outer tank 102 on the ground. Between the inner tank 101 and the outer tank 102, there is formed a vacuum insulation layer 104 for keeping the liquefied hydrogen 10 cold. The liquefied hydrogen pump 1 is installed outside the liquefied hydrogen tank 100. The liquefied hydrogen pump 1 is driven, for example, at a time of cargo handling at which the liquefied hydrogen 10 is handled onto a carrier such as a carrier ship, and draws the liquefied hydrogen 10 from the liquefied hydrogen tank 100 and sends out the liquefied hydrogen 10 to the carrier.

The liquefied hydrogen pump 1 includes a pump body 11, a pump inner tank 12, and a pump outer tank 13. The pump body 11 is a mechanism that exerts a function of pressure-feeding the liquefied hydrogen 10. The pump body 11 can include, for example: a rotary element such as an impeller; a housing that rotatably holds the rotary element; and a drive source that drives the rotary element. A pump inner tank 12 is a container that accommodates the pump body 11. A pump outer tank 13 is a container that accommodates the pump inner tank 12. Between the pump inner tank 12 and the pump outer tank 13, there is formed a vacuum insulation layer 14 for cold storage. The pump inner tank 12 corresponds to a "pump container" in the present disclosure.

An upstream pipe 51 extending from the inner tank 101 is connected to the pump inner tank 12. At the time of delivering the liquefied hydrogen 10, the liquefied hydrogen 10 supplied from the inner tank 101 through the upstream pipe 51 is stored in the pump inner tank 12. The pump body 11 sucks the liquefied hydrogen 10 stored in the pump inner tank 12 and discharges the liquefied hydrogen 10 to the outside. A downstream pipe 52 for sending the liquefied hydrogen 10 to the downstream side is connected to the pump body 11. The liquefied hydrogen 10 discharged from the pump body 11 is supplied to a discharge destination through the downstream pipe 52.

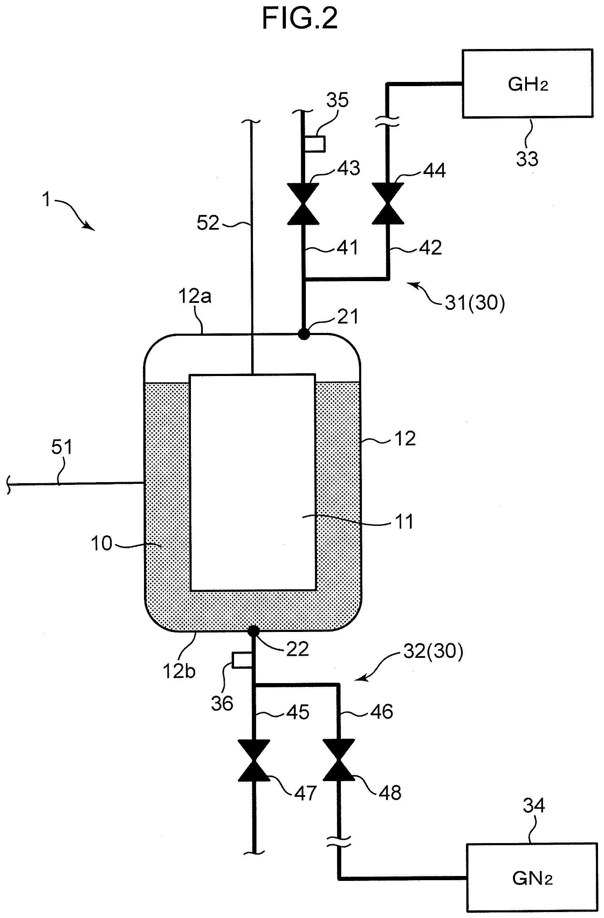

FIG. 2 is an enlarged schematic view illustrating the liquefied hydrogen pump 1 alone. In FIG. 2, only the pump body 11 and the pump inner tank 12 are illustrated, and the pump outer tank 13 is not illustrated. As shown in the figure, the pump inner tank 12 is provided with a first connection port 21 and a second connection port 22 for connecting the gas replacement device 30. The gas replacement device 30 is a device for removing the liquefied hydrogen from the pump inner tank 12 at the time of maintenance of the liquefied hydrogen pump 1, and includes an upper pipe 31 and a lower pipe 32. The first connection port 21 is a port to which the upper pipe 31 is connected, and is provided in the upper surface 12a of the pump inner tank 12. The second connection port 22 is a port to which the lower pipe 32 is connected, and is provided in a lower surface 12b of the pump inner tank 12.

The upper pipe 31 includes: a vent pipe 41 connected to the first connection port 21; and a sub-vent pipe 42 branching from the vent pipe 41. A first valve 43 that can be opened and closed is provided midway of the vent pipe 41. The sub-vent pipe 42 branches from a part of the vent pipe 41 between the first valve 43 and the first connection port 21. A second valve 44 that can be opened and closed is provided midway of the sub-vent pipe 42. An end of the sub-vent pipe 42 on the side opposite to the liquefied hydrogen pump 1 is connected to a hydrogen gas supply source 33 that is a supply source for supplying a hydrogen gas (GH₂). In the present embodiment, the hydrogen gas supplied from the hydrogen gas supply source 33 is a hydrogen gas at ambient temperature.

The lower pipe 32 includes: a drain pipe 45 connected to the second connection port 22; and a sub-drain pipe 46 branching from the drain pipe 45. A third valve 47 that can be opened and closed is provided midway of the drain pipe 45. The sub-drain pipe 46 branches from a part of the drain pipe 45 between the third valve 47 and the second connection port 22. A fourth valve 48 that can be opened and closed is provided midway of the sub-drain pipe 46. An end of the sub-drain pipe 46 on the side opposite to the liquefied hydrogen pump 1 is connected to a nitrogen gas supply source 34 that is a supply source for supplying a nitrogen gas (GN₂). In the present embodiment, the nitrogen gas supplied from the nitrogen gas supply source 34 is a nitrogen gas at ambient temperature.

The gas replacement device 30 configured as described above is used for discharging the liquefied hydrogen 10 remaining in the pump inner tank 12, by gas replacement at the time of maintenance of the liquefied hydrogen pump 1. Specifically, the gas replacement device 30 supplies a hydrogen gas and a nitrogen gas to the pump inner tank 12 in this order to push out the liquefied hydrogen 10 from the pump inner tank 12. In other words, the liquefied hydrogen 10 in the pump inner tank 12 is first pushed out by the hydrogen gas supplied from the hydrogen gas supply source 33. Thereafter, the nitrogen gas is supplied from the nitrogen gas supply source 34 to the pump inner tank 12, so that the gas in the pump inner tank 12 is replaced from the hydrogen gas to the nitrogen gas.

A drain pipe 45 of the lower pipe 32 is provided with a thermometer 36 that measures a temperature of a fluid discharged from the pump inner tank 12 at the time of the above-described replacement with the hydrogen gas. The vent pipe 41 of the upper pipe 31 is provided with a hydrogen concentration meter 35 that measures a concentration of hydrogen contained in a fluid discharged from the pump inner tank 12 at the time of replacement of the hydrogen gas with the nitrogen gas.

The gas replacement device 30 may be a temporary device prepared only at the time of maintenance of the liquefied hydrogen pump 1, and does not need to be permanently installed. If the gas replacement device 30 is permanently installed, all of the first to fourth valves 43, 44, 47, and 48 described above are maintained in a fully closed state at a normal time other than a maintenance time.

### [Inerting of Liquefied Hydrogen Pump]

Next, a description will be given on a procedure of a process in which gas replacement is performed on the pump inner tank 12 (hereinafter, the process is also referred to as an inerting process) when maintenance is performed on the above-described liquefied hydrogen pump 1. The maintenance of the liquefied hydrogen pump 1 needs to be performed after the liquefied hydrogen 10 remaining in the pump inner tank 12 is discharged in order to ensure safety and for another purpose. Therefore, before starting the maintenance, an inerting process is performed in which the liquefied hydrogen 10 is discharged from the pump inner tank 12 by gas replacement using the above-described gas replacement device 30. Although the inerting process can be performed also by automatic control by a controller including a processor, an example will be described here in which an operator manually performs the inerting process.

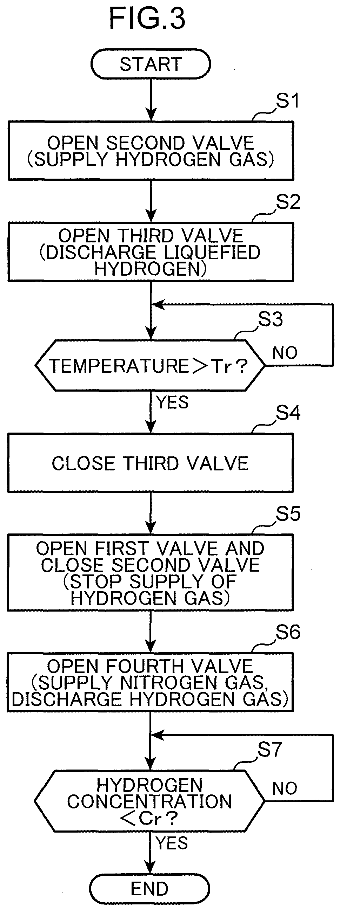

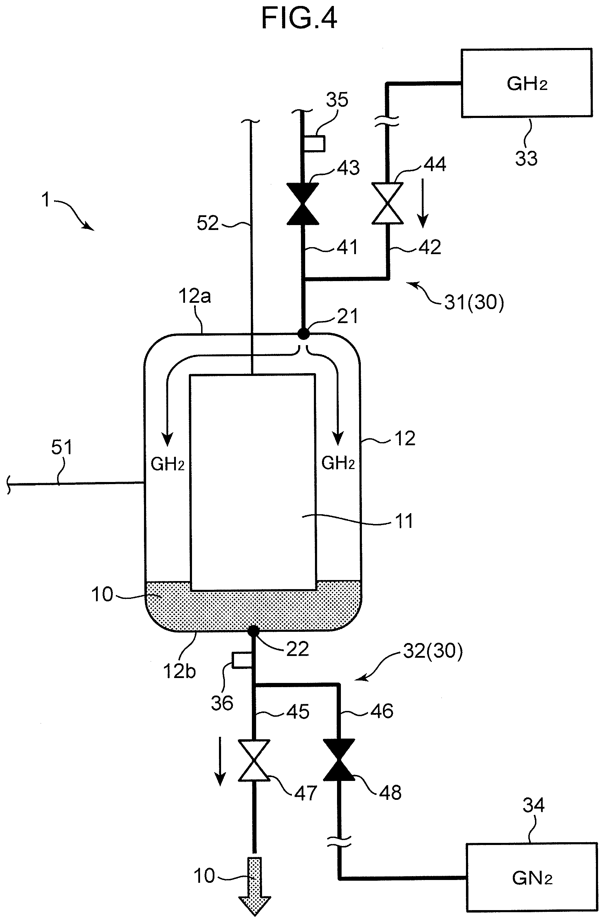

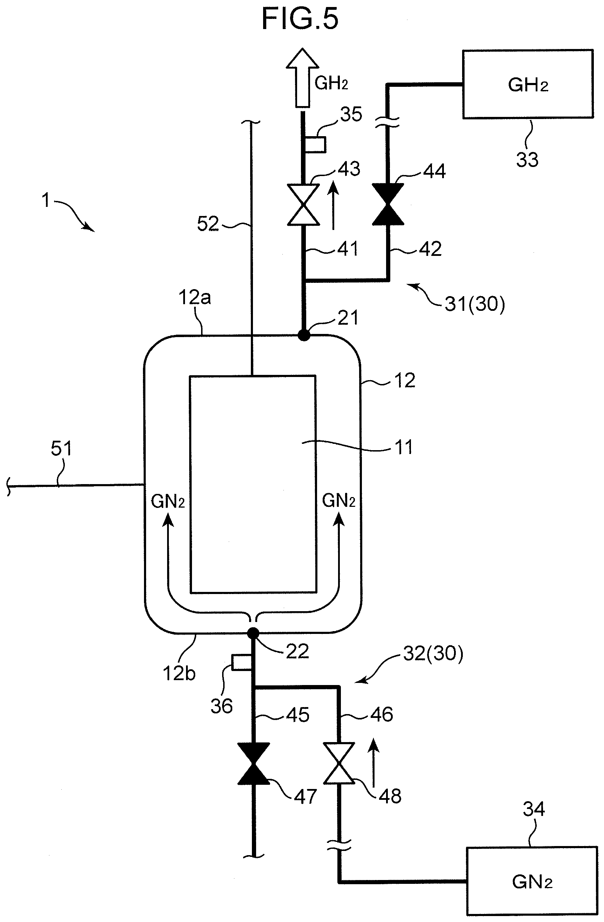

FIG. 3 is a flowchart illustrating a procedure of the inerting process. As a premise for the inerting process to be started, it is assumed that all of the first to fourth valves 43, 44, 47, and 48 of the gas replacement device 30 are in a fully closed state. FIG. 2 illustrates that state. That is, in FIG. 2, the first to fourth valves 43, 44, 47, and 48 are illustrated in solid black to indicate that all the valves are in a fully closed state. On the other hand, the valves in the open state are illustrated as white marks (see FIGS. 4 and 5 to be described later).

As the inerting process starts, the operator first opens the second valve 44 (step S1). As a result, the hydrogen gas (GH₂) at ambient temperature fed from the hydrogen gas supply source 33 is supplied to the inside of the pump inner tank 12 through the sub-vent pipe 42.

Next, the operator opens the third valve 47 (step S2). As a result, as illustrated in FIG. 4, the liquefied hydrogen 10 remaining in the pump inner tank 12 is discharged to the outside through the drain pipe 45. That is, when the third valve 47 is additionally opened in a state where the supply of the hydrogen gas in step S1 is continued, the liquefied hydrogen 10 in the pump inner tank 12 is pushed out by the supplied hydrogen gas and is discharged through the drain pipe 45. The drain pipe 45 is connected to, for example, a predetermined recovery line, and the liquefied hydrogen 10 is recovered through the recovery line.

When the operations in steps S1 and S2 are continued for a certain period of time, substantially all the liquefied hydrogen 10 is discharged from the pump inner tank 12, and the inside of the pump inner tank 12 is entirely occupied by a hydrogen gas. That is, the fluid in the pump inner tank 12 is replaced from the liquefied hydrogen 10 to the hydrogen gas. In order to confirm that the replacement has been completed, the operator determines whether the temperature measured by the thermometer 36 has exceeded a previously determined reference temperature Tr (step S3). The reference temperature Tr is a temperature higher than the melting point (solidification temperature) of nitrogen, and can be set to, for example, about 80 K. Such a temperature is sufficiently higher than the temperature of the liquefied hydrogen 10. Therefore, the fact that the temperature measured by the thermometer 36, that is, the temperature of the fluid passing through the drain pipe 45, exceeds the reference temperature Tr means that the fluid discharged from the pump inner tank 12 is not the liquefied hydrogen 10 but a hydrogen gas. The operator continues the operations in steps S1 and S2 until the determination in step S3 becomes YES, that is, until the measured temperature exceeds the reference temperature Tr.

In the present embodiment, since the thermometer 36 measures the temperature of the fluid immediately after being discharged from the pump inner tank 12, the temperature measured by the thermometer 36 in step S3 is equivalent to an internal temperature of the pump inner tank 12. In other words, the determination in step S3 can be referred to as the determination of whether the internal temperature of the pump inner tank 12 exceeds the reference temperature Tr higher than the melting point of nitrogen.

When the determination in step S3 is YES, and it is therefore confirmed that the temperature measured by the thermometer 36 exceeds the reference temperature Tr, the operator closes the third valve 47 (step S4).

Next, the operator opens the first valve 43 and closes the second valve 44 (step S5). As a result, the supply of the hydrogen gas from the hydrogen gas supply source 33 to the pump inner tank 12 is stopped.

Next, the operator opens the fourth valve 48 (step S6). As a result, as illustrated in FIG. 5, the nitrogen gas (GN₂) having ambient temperature fed from the nitrogen gas supply source 34 is supplied to the inside of the pump inner tank 12 through the sub-drain pipe 46. The supplied nitrogen gas pushes out the hydrogen gas occupying the pump inner tank 12 from the pump inner tank 12, and discharges the hydrogen gas to the outside through the vent pipe 41. The vent pipe 41 is connected to, for example, a predetermined recovery line, and the hydrogen gas is recovered through the recovery line.

When the operations in steps S4 to S6 are continued for a certain period of time, substantially all the hydrogen gas is discharged from the pump inner tank 12, and the inside of the pump inner tank 12 is entirely occupied by a nitrogen gas. That is, the gas in the pump inner tank 12 is replaced from the hydrogen gas to the nitrogen gas. In order to confirm that the replacement has been completed, the operator determines whether the concentration measured by the hydrogen concentration meter 35 has become lower than a previously determined reference concentration Cr (step S7). The reference concentration Cr is set to a value sufficiently smaller than a lower flammable limit, which is a lower limit value of the concentration at which combustion of hydrogen occurs. The fact that the concentration measured by the hydrogen concentration meter 35, that is, the hydrogen concentration in the gas passing through the vent pipe 41 is lower than the reference concentration Cr means that almost no hydrogen gas is contained in the gas discharged from the pump inner tank 12. The operator continues the operations in steps S4 to S6 until the determination in step S7 becomes YES, that is, until the measured concentration falls below the reference concentration Cr. As a result, the replacement of the hydrogen gas with the nitrogen gas has been completed, and the inside of the pump inner tank 12 is entirely occupied by the nitrogen gas.

In the procedure of the inerting process as described above (FIG. 3), the operations in steps S1 and S2 correspond to a "first purge" in the present disclosure, the determination in step S3 corresponds to a "temperature determination" in the present disclosure, and the operations in steps S4 to S6 correspond to a "second purge" in the present disclosure.

### [Action and Effect]

As described above, in the present embodiment, at the time of maintenance of the liquefied hydrogen pump 1, the liquefied hydrogen 10 remaining in the pump inner tank 12 is discharged to the outside by gas replacement. Specifically, first, when the hydrogen gas is supplied from the hydrogen gas supply source 33 to the pump inner tank 12, the liquefied hydrogen 10 is pushed out by the hydrogen gas, and the liquefied hydrogen 10 is discharged from the pump inner tank 12. Thereafter, the nitrogen gas is supplied from the nitrogen gas supply source 34 to the pump inner tank 12, whereby the gas in the pump inner tank 12 is replaced from the hydrogen gas to the nitrogen gas. Such a method has an advantage that the liquefied hydrogen 10 can be discharged from the pump inner tank 12 without solidification of the replacement gas, and has another advantage.

If the nitrogen gas is first supplied to discharge the liquefied hydrogen 10, the nitrogen gas may be solidified when the nitrogen gas comes into contact with the cryogenic liquefied hydrogen 10 remaining in the pump inner tank 12. If the nitrogen gas is solidified, the liquefied hydrogen 10 may be hindered from being discharged due to clogging of the solidified component (ice lump) in the pipe. In contrast, in the present embodiment, the hydrogen gas is supplied, instead of the nitrogen gas, as the replacement gas for pushing out the liquefied hydrogen 10, so that, unlike as described above, it is possible to prevent the problem due to the solidification of the replacement gas. That is, it is a matter of course that the hydrogen gas is not solidified at the temperature of the liquefied hydrogen 10, to which a hydrogen gas is liquefied; therefore, the hydrogen gas is not solidified even when the hydrogen gas comes into contact with the liquefied hydrogen 10. Therefore, it is possible to prevent such a problem that the solidified component of the replacement gas causes pipe clogging or the like. In addition, since the supplied hydrogen gas is subsequently replaced with the nitrogen gas, it is possible to prevent the hydrogen gas from scattering to the outside air when the maintenance is performed, and it is therefore possible to ensure the safety of the maintenance.

Of course, if an inert gas having a melting point lower than that of a nitrogen gas, for example, if a helium gas is used as the replacement gas, it is considered that the liquefied hydrogen 10 can be replaced with the inert gas by a single gas replacement. However, since a helium gas is considerably more expensive than a nitrogen gas, there is a problem that the cost required for the maintenance increases. In contrast, in the present embodiment, since an inexpensive nitrogen gas and a hydrogen gas that is abundantly available from an evaporation component of the liquefied hydrogen 10 are used as the replacement gas, the cost required for the maintenance can be effectively suppressed.

In the present embodiment, after the supply of the hydrogen gas to the pump inner tank 12 is started, the temperature measured by the thermometer 36 provided in the drain pipe 45 is examined, in other words, the internal temperature of the pump inner tank 12 is examined, and after it is confirmed that the temperature exceeds the reference temperature Tr higher than the melting point of nitrogen, the supply of the nitrogen gas to the pump inner tank 12 is started. By such a method, it is possible to accurately prevent the nitrogen gas supplied to the pump inner tank 12 from being solidified.

In the present embodiment, since the hydrogen gas supplied to the pump inner tank 12 is a hydrogen gas at ambient temperature, the temperature of the pump inner tank 12 is easily raised by the supply of the hydrogen gas. As a result, the time required until the internal temperature of the pump inner tank 12 exceeds the reference temperature Tr after the supply of the hydrogen gas is started is shortened, so that the work efficiency can be improved by advancing the timing of starting the supply of the nitrogen gas.

In the present embodiment, the hydrogen gas is supplied from the upper pipe 31 connected to the upper surface 12a of the pump inner tank 12 to the pump inner tank 12, and at the same time, the liquefied hydrogen 10 is discharged from the pump inner tank 12 through the lower pipe 32 connected to the lower surface 12b of the pump inner tank 12, so that the liquefied hydrogen 10 can be efficiently discharged from the pump inner tank 12. That is, the hydrogen gas having a relatively small specific gravity is supplied from the upper pipe 31 to the upper part of the pump inner tank 12, and at the same time, the liquefied hydrogen 10 having a relatively large specific gravity is discharged from the bottom part of the pump inner tank 12 to the outside through the lower pipe 32, the liquefied hydrogen 10 can be efficiently discharged from the pump inner tank 12, and the work efficiency can be improved.

In the present embodiment, the nitrogen gas is supplied from the lower pipe 32 to the pump inner tank 12, and at the same time, the hydrogen gas is discharged from the pump inner tank 12 through the upper pipe 31; therefore, the replacement of the hydrogen gas with the nitrogen gas can be efficiently performed. That is, the nitrogen gas having a relatively large specific gravity is supplied from the lower pipe 32 to the bottom part of the pump inner tank 12, and at the same time, the hydrogen gas having a relatively small specific gravity is discharged from the upper part of the pump inner tank 12 to the outside through the upper pipe 31; therefore, the gas in the pump inner tank 12 can be efficiently replaced from the hydrogen gas to the nitrogen gas, whereby the work efficiency can be improved.

### [Variations]

Although a preferred embodiment of the present disclosure has been described above, the present disclosure is not limited thereto, and for example, the following variations are possible.

In the above embodiment, the first connection port 21 to which the upper pipe 31 is connected is provided in the upper surface 12a of the pump inner tank 12, but the first connection port 21 only needs to be provided in an upper part of the pump inner tank 12 and does not need to be provided in the upper surface 12a. For example, the first connection port 21 may be provided in an upper side surface of the pump inner tank 12.

Similarly, in the above embodiment, the second connection port 22 to which the lower pipe 32 is connected is provided is the lower surface 12b of the pump inner tank 12, but the second connection port 22 only needs to be provided in a lower part of the pump inner tank 12 and does not need to be provided in the lower surface 12b. For example, the second connection port 22 may be provided in a lower side surface of the pump inner tank 12.

In the above embodiment, the thermometer 36 is provided midway of the drain pipe 45 of the lower pipe 32, but the thermometer 36 may be provided at a place where a significant temperature rise is observed at the time of completion of the operation of discharging the liquefied hydrogen 10 from the pump inner tank 12, that is, at the time of completion of the replacement of the liquefied hydrogen 10 with the hydrogen gas, and the place where the thermometer 36 is to be provided can be appropriately changed as long as a significant temperature rise is observed. For example, the thermometer 36 may be attached to the pump inner tank 12 so as to be able to measure the temperature of a bottom part of the pump inner tank 12. In this case, when the measured temperature at the bottom part of the pump inner tank 12 exceeds a predetermined reference temperature, it can be considered that the liquefied hydrogen 10 is not present in the bottom part of the pump inner tank 12, that is, the discharge of the liquefied hydrogen 10 has been completed.

In the above embodiment, an example has been described in which the present disclosure is applied to the liquefied hydrogen pump 1 of a type in which the pump body 11 is accommodated in the pump inner tank 12 (pump container) capable of storing the liquefied hydrogen 10. However, the gas replacement method of the present disclosure is widely applicable to a liquefied hydrogen pump in which liquefied hydrogen can remain at some place inside the liquefied hydrogen pump. That is, the gas replacement method of the present disclosure can be used to discharge liquefied hydrogen remaining inside the liquefied hydrogen pump by gas replacement, and the place where the gas replacement is performed is not limited to the inside of the pump container.

In the above embodiment, an example has been described in which the gas replacement method of the present disclosure is applied to the liquefied hydrogen pump 1 that delivers the liquefied hydrogen 10 from the spherical liquefied hydrogen tank 100. However, the liquefied hydrogen pump 1 may be another type of liquefied hydrogen tank, for example, a pump that delivers liquefied hydrogen from a liquefied hydrogen tank of a flat bottom cylindrical type. In any case, the gas replacement method of the present disclosure is widely applicable to various pumps used for the purpose of sending out liquefied hydrogen.

### [Conclusion]

The above embodiment and the variations thereof include the following disclosure.

A gas replacement method for a liquefied hydrogen pump according to one aspect of the present disclosure is a method for discharging, using a replacement gas, liquefied hydrogen remaining in a liquefied hydrogen pump that sends out liquefied hydrogen, and the gas replacement method includes: performing a first purge, the first purge including: supplying a hydrogen gas to an inside of the liquefied hydrogen pump; and causing the supplied hydrogen gas to push out the liquefied hydrogen to an outside from the inside of the liquefied hydrogen pump; and performing, after the first purge, a second purge, the second purge including: supplying a nitrogen gas to the inside of the liquefied hydrogen pump; and causing the supplied nitrogen gas to push out the hydrogen gas to the outside from the inside of the liquefied hydrogen pump.

According to the present disclosure, the hydrogen gas is first supplied as the replacement gas for pushing out the liquefied hydrogen. Since it is a matter of fact that the hydrogen gas is not solidified at the temperature of the liquefied hydrogen, to which a hydrogen gas is liquefied, the hydrogen gas is not solidified even when the hydrogen gas comes into contact with the liquefied hydrogen. Therefore, it is possible to prevent a problem caused by solidification of the replacement gas, for example, a problem such as clogging of the pipe with a solidified component of the replacement gas. In addition, since the supplied hydrogen gas is subsequently replaced with the nitrogen gas, it is possible to prevent the hydrogen gas from scattering to the outside air when a maintenance of the liquefied hydrogen pump is performed, and it is therefore possible to ensure the safety of the maintenance.

Preferably, the gas replacement method further includes: performing, after the first purge is started, temperature determination to determine whether an internal temperature of the liquefied hydrogen pump has exceeded a melting point (solidification temperature) of nitrogen. The second purge is started after the temperature determination confirms that the internal temperature of the liquefied hydrogen pump has exceeded the melting point.

With this aspect, it is possible to accurately prevent the nitrogen gas supplied to the inside of the liquefied hydrogen pump from being solidified.

Preferably, in the first purge, the hydrogen gas at ambient temperature is supplied to the inside of the liquefied hydrogen pump.

With this aspect, it is possible to shorten the time required for the internal temperature of the liquefied hydrogen pump to exceed the melting point of nitrogen after the supply of hydrogen gas is started. As a result, the timing of starting the supply of the nitrogen gas can be advanced to improve the work efficiency.

Preferably, in the first purge, the hydrogen gas is supplied to the inside from an upper part of the liquefied hydrogen pump, and the liquefied hydrogen is discharged to the outside from a bottom part of the liquefied hydrogen pump.

With this aspect, the liquefied hydrogen can be efficiently discharged from the liquefied hydrogen pump, and the work efficiency can be improved.

Preferably, in the second purge, the nitrogen gas is supplied to the inside from the bottom part of the liquefied hydrogen pump, and the hydrogen gas is discharged to the outside from the upper part of the liquefied hydrogen pump.

With this aspect, the gas in the liquefied hydrogen pump can be efficiently replaced from the hydrogen gas to the nitrogen gas, and the work efficiency can be improved.

The liquefied hydrogen pump may include: a pump container that receives liquefied hydrogen supplied from an upstream side; and a pump body that is disposed in the pump container and discharges liquefied hydrogen in the pump container to a downstream side. In this case, it is preferable that the hydrogen gas is supplied to an inside of the pump container in the first purge and that the nitrogen gas is supplied to the inside of the pump container in the second purge.

With this aspect, the liquefied hydrogen remaining in the pump container can be appropriately discharged to the outside by gas replacement.

### Reference Signs

- 1: liquefied hydrogen pump
- 10: liquefied hydrogen
- 11: pump body
- 12: pump inner tank (pump container)

## Claims

1. gas replacement method for a liquefied hydrogen pump that is a method for discharging, using a replacement gas, liquefied hydrogen remaining in a liquefied hydrogen pump that sends out liquefied hydrogen, the gas replacement method comprising:
performing a first purge, the first purge including: supplying a hydrogen gas to an inside of the liquefied hydrogen pump; and causing the supplied hydrogen gas to push out the liquefied hydrogen to an outside from the inside of the liquefied hydrogen pump; and
performing, after the first purge, a second purge, the second purge including: supplying a nitrogen gas to the inside of the liquefied hydrogen pump; and causing the supplied nitrogen gas to push out the hydrogen gas to the outside from the inside of the liquefied hydrogen pump.

2. The gas replacement method for a liquefied hydrogen pump according to claim 1, further comprising performing, after the first purge is started, temperature determination to determine whether an internal temperature of the liquefied hydrogen pump has exceeded a melting point of nitrogen;
wherein the second purge is started after the temperature determination confirms that the internal temperature of the liquefied hydrogen pump has exceeded the melting point.

3. The gas replacement method for a liquefied hydrogen pump according to claim 2, wherein in the first purge, the hydrogen gas at ambient temperature is supplied to the inside of the liquefied hydrogen pump.

4. The gas replacement method for a liquefied hydrogen pump according to any one of claims 1 to 3, wherein in the first purge, the hydrogen gas is supplied to the inside from an upper part of the liquefied hydrogen pump, and the liquefied hydrogen is discharged to the outside from a bottom part of the liquefied hydrogen pump.

5. The gas replacement method for a liquefied hydrogen pump according to any one of claims 1 to 3, wherein in the second purge, the nitrogen gas is supplied to the inside from a bottom part of the liquefied hydrogen pump, and the hydrogen gas is discharged to the outside from an upper part of the liquefied hydrogen pump.

6. The gas replacement method for a liquefied hydrogen pump according to any one of claims 1 to 3, wherein
the liquefied hydrogen pump includes: a pump container that receives liquefied hydrogen supplied from an upstream side; and a pump body that is disposed in the pump container and discharges liquefied hydrogen in the pump container to a downstream side,
the first purge includes supplying the hydrogen gas to an inside of the pump container, and
the second purge includes supplying the nitrogen gas to the inside of the pump container.
